# EUROPEAN PATENT APPLICATION

(11) **EP 2 728 791 A1**
(43) Date of publication of application: **07.05.2014**
(21) Application number: 12191367.7
(22) Date of filing: 06.11.2012
(51) Int. Cl.: H04L 9/18, H04L 9/06, G06F 17/30

(54) **Method and system of secure service supply to a user**

(71) Applicant: Movym S.r.l., 20124 Milano (IT)
(72) Inventor: Bertani, Sebastiano, I-20124 Milano (IT); Arconte, Davide, I-20124 Milano (IT)
(74) Representative: Giannesi, Simona

(57) **Abstract**

Method and system of service supply wherein a medium M is supplied to a user device (10), the medium M comprising encrypted embedded information that comprises at least one identifier ID_{SP} associated with a predetermined service and a perceptual hash H of the medium M. The embedded information is extracted from the medium M and decrypted in order to obtain said at least one identifier ID_{SP} and said perceptual hash H. The user device (10) uses the at least one identifier TD_{SP} to connect to the service provider (20) and to supply the predetermined service to a user of the user device (10) only if a perceptual hash H' computed for the medium M matches with the perceptual hash H as obtained from the decryption of the encrypted embedded information.

## Description

The present invention relates to a method and system for securely supplying a service to a user.

In particular, the invention relates to a method and system wherein a medium (e.g. an audio signal) is transmitted (e.g. through radio or TV broadcasting) to a user device. The medium comprises embedded information that enables the user device to connect to a service provider and to supply a predetermined service to the user.

US 6 505 160 discloses a method of linking an audio signal to metadata or actions wherein audio signals (e.g., music, sound tracks, voice recording, etc.) are transformed into active connected objects via identifiers embedded into them. In a user's player device, a decoding process extracts the identifier from an audio signal and forwards it to a server. The server, in turn, maps the identifier to an action, such as returning metadata, re-directing the request to one or more other servers, requesting information from another server to identify the audio signal.

The Applicant observes that security issues may arise in the method disclosed by US 6 505 160.

For example, the Applicant observes that the method disclosed by US 6 505 160 lacks integrity in that an intruder could replace a medium M containing an identifier ID with another medium M' containing another identifier ID'. This could mean, for example, that while a user is tuned to a radio station broadcasting an audio signal M with an identifier ID (linked to a predetermined service), an intruder might broadcast another audio signal M' containing another identifier ID' (linked to a fraudulent service). In order to deceive the user, the volume of the audio signal M' could be kept lower than the audio signal M but still be detectable by the user device. Thus, thee user device detecting M' could extract ID' and supply the fraudulent service to the user, which instead is thinking to get the correct service.

The lack of integrity of the method disclosed by US 6 505 160 can thus be an opportunity for phishing attacks to the user.

The Applicant further observes that the method disclosed by US 6 505 160 lacks medium authentication in that it does not guarantee that a predetermined ID, received by a user device embedded into a medium M, is the right ID, originally intended for being embedded into said medium M. Indeed, in the system of US 6 505 160, an intruder could detect an identifier ID embedded into a medium M and embed it into a different medium M'. Any user listening to M' could thus extract, through his/her user device, the identifier ID and get the associated service. Because of this lack of medium authentication, a service provider cannot be assured that a specific service is delivered only through the pertinent medium M. In addition, the user is exposed to phishing attacks.

It is thus an object of the invention to improve security in supplying a service to a user in a system wherein a medium is transmitted to a user device with embedded information that enables the user device to connect to a service provider for supplying a predetermined service to the user.

This object is achieved by a method according to claim 1.

In particular, in a first aspect, the present invention relates to a method of service supply comprising the steps of:
- supplying a medium to a user device, the medium comprising embedded information that, in turn, comprises at least one identifier associated with a predetermined service,
- extracting the embedded information from the medium supplied to the user device in order to obtain said at least one identifier,
- using said at least one identifier to connect the user device to a service provider for supplying said predetermined service to a user of the user device,
**characterized in that**:
- the embedded information is encrypted and further comprises a perceptual hash of the medium, the step of extracting being performed on the encrypted embedded information, and in that
- the method further comprises the steps of:
   * decrypting the encrypted embedded information, as extracted from the medium, in order to obtain said at least one identifier and said perceptual hash,
   * computing a perceptual hash of the medium and comparing the computed perceptual hash with the perceptual hash as obtained from the encrypted embedded information, the step of using said at least one identifier being performed if the computed perceptual hash matches with the perceptual hash obtained from the encrypted embedded information.

In a second aspect, the present invention relates to a system of service supply comprising a user device which is adapted to:
- receive a medium, the medium comprising embedded information that, in turn, comprises at least one identifier associated with a predetermined service,
- to use said at least one identifier to connect to a service provider for supplying said predetermined service to a user of the user device,
**characterized in that**:
- the embedded information is encrypted and further comprises a perceptual hash of the medium, and in that
- the user device is adapted to obtain decryption of the encrypted embedded information and to use said at least one identifier to connect to the service provider if a perceptual hash computed for the medium matches with the perceptual hash as obtained from the decryption of the encrypted embedded information.

According to the claimed invention, the embedded information is encrypted. This advantageously enables to guarantee both the authenticity of the source of the embedded information and the integrity thereof. In fact, a possible intruder, unknowing the encryption keys, will be unable to tamper with the embedded information.

In addition, according to the claimed invention, the encrypted embedded information comprises a perceptual hash of the medium and the at least one identifier is used for supplying the predetermined service to the user only if a perceptual hash computed for the medium matches with the perceptual hash as obtained from the encrypted embedded information. This further feature, combined with the above encryption feature, advantageously enables to guarantee that the encrypted embedded information is properly associated with the intended medium M. In fact, even if an intruder, coming into possession of the encrypted embedded information (comprising the perceptual hash of medium M), embedded the encrypted embedded information into a different medium M', the comparison step between the perceptual hash computed on medium M' and the perceptual hash of medium M (embedded in the encrypted information) would be negative and the service would not be supplied to the user. In addition, an intruder, coming into possession of the identifier ID (by decrypting the encrypted information embedded into medium M) and wishing to embed said identifier ID into another medium M' together with a perceptual hash of such medium M', would be unable to encrypt the fraudulent embedded information into medium M' with the proper encryption key and, thus, to supply the service S in association with the improper medium M'.

In the present description and claims, the term "perceptual hash" is used to indicate a hash function that, in case of audio or video signals, is adapted to take into account the perceptual characteristics of audio or video signals. This means, for example, that if two media sound alike to the human senses their perceptual hash will match, even if their binary representations are quite different. Perceptual hash will thus be insensitive to audio compression techniques (e.g. MP3, WMA, Vorbis) and analog transmission artifacts.

In the present description and claims, the term "asymmetric key cryptography" is used to indicate a cryptographic system requiring two separate keys, a private key which is kept secret and a public key which is published or public. One key (either of them) is used to encrypt a plaintext, while the other key is used to decrypt a ciphertext.

In the present description and claims, the term "symmetric key cryptography" is used to indicate a cryptographic system wherein a same secret key is shared between two or more parties and is used for both encryption of plaintext and decryption of ciphertext.

In the present description and claims, the term "digital signature" is used to indicate a mathematical scheme for demonstrating the authenticity of a digital message or document. Digital signature may employ asymmetric cryptography.

In the present description and claims, the term "medium" is used to indicate a channel or system or tool of communication, information, or entertainment. For example, the medium can be an audio signal or a video signal.

The dependent claims refer to particularly advantageous embodiments of the invention.

The present invention in at least one of the aforementioned aspects can have at least one of the following preferred characteristics.

Preferably, the medium is an audio signal. The audio signal content can be music or voice as, for example, talks from movies, from TV or radio programs, from TV or radio advertisements, from TV or radio talk shows, and similar.

In a preferred embodiment, the embedded information is encrypted by means of asymmetric key cryptography.

Advantageously, the embedded information is encrypted by using a private key of at least one certification authority.

Advantageously, decrypting the encrypted embedded information is performed by using a public key of said at least one certification authority.

According to a preferred embodiment, the user device is connected to the service provider by means of encrypted data communication. Said encrypted data communication between the user device and the service provider is advantageously performed by means of asymmetric key cryptography. Said encrypted data communication between the user device and the service provider is advantageously performed also by means of digital signature.

In said preferred embodiment, the encrypted embedded information preferably further comprises a public key of the service provider.

In said preferred embodiment, the user device preferably sends to the service provider a digital certificate of the user device.

The digital certificate of the user device is advantageously encrypted by using a private key of a certification authority.

The digital certificate of the user device preferably comprises a public key of the user device. The digital certificate of the user device preferably comprises an identifier of the user device. The digital certificate of the user device preferably comprises a time stamp. The time stamp can be advantageously used to indicate an expiry date of the digital certificate.

According to a preferred embodiment, the asymmetric key cryptography is used by the user device and the service provider for exchanging a secret key, said secret key being used by the user device and the service provider for exchanging data relating to the supply of said predetermined service to the user, according to symmetric key cryptography.

Suitably, the medium is supplied to the user device by a media provider.

The medium can for example be supplied to the user device by means of broadcasting, streaming or downloading.

According to an embodiment, the step of extracting the encrypted embedded information from the medium is executed by the user device.

According to a preferred embodiment, the user device receiving the medium with the encrypted embedded information sends it to a remote server. According to this preferred embodiment, the step of extracting the encrypted embedded information from the medium is executed by the remote server. In an embodiment, after extraction from the medium, the remote server transmits the extracted encrypted information to the user device (the steps of decrypting, computing and comparing being performed by the user device). In a variant, after extraction from the medium, the remote server decrypts the extracted encrypted information so as to obtain said at least one identifier and said perceptual hash. In this variant, the remote server preferably transmits the at least one identifier to the user device. In addition, the remote server can transmit the perceptual hash to the user device (the steps of computing and comparing being performed by the user device) or can carry out itself the computation and comparison steps and send the result of the comparison step to the user device. In this variant, the user device and the remote server preferably communicate by means of encrypted data communication, as for example, asymmetric key cryptography and, optionally, digital signature.

Preferably, the embedded information is embedded into the medium by means of watermarking or steganography.

According to an embodiment, the encrypted embedded information is embedded into the medium by said at least one certification authority.

Suitably, the perceptual hash is computed on the medium comprising the encrypted embedded information.

The user device can be a PC, a smart phone, a tablet, a portable media player (e.g. an iPod®), or other similar devices.

The system can further comprise a media provider adapted to transmit said medium with the encrypted embedded information to the user device.

The media provider can be, for example, a radio station, a TV station, a PC or a similar device.

In a preferred embodiment, the system further comprises a remote server adapted to receive from the user device said medium with the encrypted embedded information and to extract said encrypted embedded information from the medium. This embodiment can be advantageous to save power, memory and computational resources at the user device. However, in an alternative embodiment the extraction step can be performed by the user device itself. The remote server is advantageously adapted to transmit the extracted encrypted embedded information to the user device.

According to an embodiment, the user device is adapted to decrypt the extracted encrypted information in order to obtain said at least one identifier and said perceptual hash.

According to another embodiment, the decryption step can be performed outside the user device, for example by the same remote server making the extraction step or another remote server. In this case, the (other) remote server is advantageously adapted to transmit the extracted and decrypted information (that is, said at least one identifier and said perceptual hash) to the user device. In addition, in this case, the user device and the (other) remote server are preferably adapted to communicate by means of encrypted data communication. Said encrypted data communication between the user device and the (other) remote server is preferably performed by means of asymmetric key cryptography. Said encrypted data communication between the user device and the service provider is preferably performed also by means of digital signature.

According to an embodiment, the user device is adapted to compute the perceptual hash of the medium and to compare the computed perceptual hash with the perceptual hash as obtained from the encrypted embedded information. According to another embodiment, the computation and/or comparison steps can be performed outside the user device, for example by the same remote server making the extraction step or another remote server.

The at least one identifier may comprise either an address of the service provider or an identifier associated with said address.

When the at least one identifier comprises the address of the service provider, the user device can directly use it to connect to the service provider.

On the other hand, when the at least one identifier comprises an identifier associated with the address of the service provider, the user device will be adapted to retrieve the address associated with the identifier, for example from a suitable database. The database can be either a local database hosted into the user device and/or a remote database hosted into the remote server making the extraction step and/or another remote server.

Further characteristics and advantages of the present invention will become clearer from the following detailed description of some preferred embodiments thereof, made as an example and not for limiting purposes with reference to the attached drawings. In such drawings,
- figure 1 shows a system according to an embodiment of the invention;
- figure 2 schematically shows actions performed by a media provider (MP), a user device (U) and a remote server (RS) in the system of figure 1, according to an embodiment of the invention;
- figure 3 schematically shows actions performed by a media provider (MP), a user device (U) and a remote server (RS) in the system of figure 1, according to another embodiment of the invention;
- figure 4 schematically shows actions performed by a user device (U) and a service provider (SP) for obtaining digital certificates from a certification authority CA, in an asymmetric key cryptography context;
- figure 5 schematically shows actions performed by a media provider (MP), a user device (U) and a remote server (RS) according to a variant of the embodiment of figure 2, wherein asymmetric key cryptography is used between the user device and the service provider;
- figure 6 schematically shows actions performed by a media provider (MP), a user device (U) and a remote server (RS) according to a variant of the embodiment of figure 3, wherein asymmetric key cryptography is used between the user device and the service provider;
- figure 7 schematically shows actions that can be performed by a user device (U) and a service provider (SP) in the embodiments of figures 4-6, according to asymmetric key cryptography;
- figure 8 schematically shows a variant of figure 7, wherein digital signature is also used;
- figure 9 schematically shows actions that can be performed by a user device (U) and a service provider (SP) in the embodiments of figures 4-6, according to symmetric key cryptography.

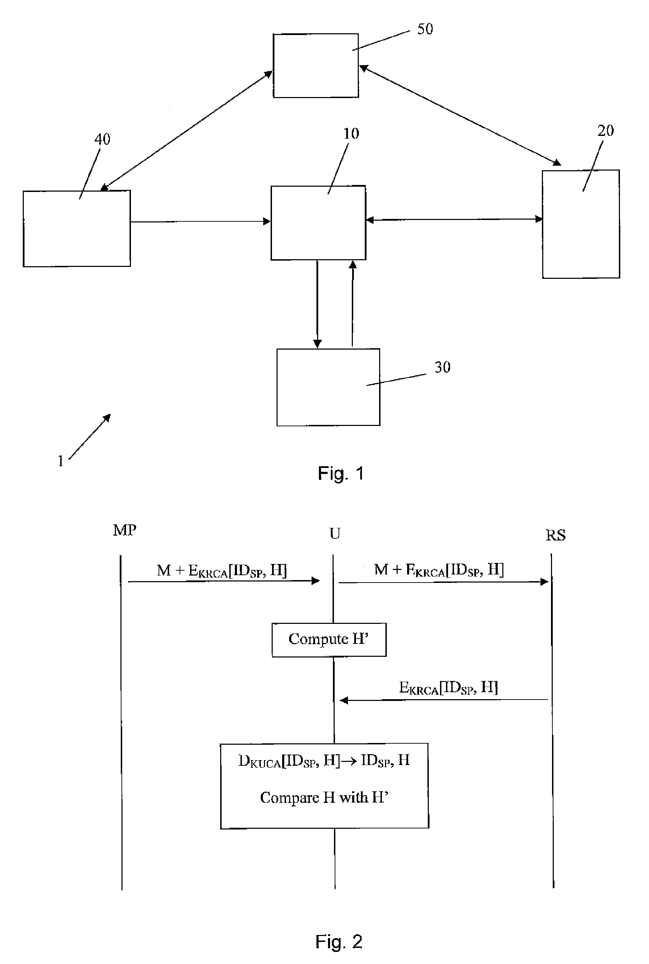

Figure 1 discloses a system 1 of service supply according to an embodiment of the invention. The system 1 comprises a user device 10, a service provider 20, a remote server 30, a media provider 40 and at least one certification authority 50.

The user device 10 can be, for example, a PC, a smart phone, a tablet, a portable media player (e.g. an iPod®), or other similar device.

The media provider 40 can be, for example, a TV station, a radio station, a PC or other similar device.

The user device 10, the service provider 20, the remote server 30, the media provider 40 and the at least one certification authority 50 are advantageously adapted to communicate to each other through a suitable communication network, according to technique known in the art.

The user device 10, the service provider 20, the remote server 30, the media provider 40 and the at least one certification authority 50 advantageously comprise hardware and/or software and/or firmware configured to implement the method of the invention.

The media provider 40 is adapted to supply a medium M to the user device 10.

The medium can be supplied to the user device 10 by means of broadcasting (e.g. from a TV or radio station), streaming (e.g. from the internet) or downloading (e.g. from a PC).

In a preferred embodiment of the invention, the medium is an audio signal.

The audio signal can comprise music or voice as, for example, talks from movies, from TV or radio programs, from TV or radio advertisements, from TV or radio talk shows, and similar.

For example, the user device 10 can be adapted to download or stream a video from the internet (the medium being the audio signal of the video) or to detect the audio signal of a TV program broadcasted on the TV or to detect the audio signal of a movie played by means of a DVD player, a VHS player, a decoder or similar. According to the invention, the medium M advantageously comprises information including at least one identifier ID_{SP} associated with a predetermined service S and a perceptual hash H of the medium M.

According to the invention, said information is encrypted.

In a preferred embodiment of the invention shown in figure 2, the encrypted information E_{KRCA}[TD_{SP},H] is encrypted by using asymmetric key cryptography.

In particular, the encrypted information E_{KRCA}[ID_{SP},H] is encrypted by the certification authority 50, by using a private key KR_{CA} of the certification authority 50.

In this case, the user device 10 is advantageously adapted to obtain via a secure channel, according to techniques known in the art, a public key KU_{CA} of the certification authority 50 in order to be able to decrypt information encrypted with the private key KR_{CA}.

According to the invention, the encrypted information E_{KRCA}[TD_{SP},H] is embedded into the medium.

In a preferred embodiment of the invention, the encrypted information E_{KRCA}[ID_{SP},H] is embedded into the medium according to steganography, watermarking or other data hiding techniques known in the art. According to these techniques, the embedded information is imperceptible to the user. In particular, the embedded information is imperceptible to human senses.

Advantageously, the encrypted information E_{KRCA}[ID_{SP},H] is embedded into the medium by the certification authority 50.

The certification authority 50 can advantageously agree upon the information and, in particular, about the identifier ID_{SP} to be embedded into the medium with the service provider 20 (e.g. an administrator of the service provider 20).

In addition, the certification authority 50 will be advantageously adapted to supply the medium M with the embedded encrypted information E_{KRCA}[ID_{SP},H] to the media provider 40.

Figure 2 schematically shows the main actions performed by the media provider 40 (MP), the user device 10 (U) and the remote server 30 (RS), according to an embodiment of the invention.

The user device 10 is adapted to receive the medium M comprising the encrypted embedded information E_{KRCA}[ID_{SP},H] from the media provider 40.

The user device 10 is adapted to send the medium with the encrypted embedded information M + E_{KRCA}[ID_{SP},H] to the remote server 30.

In a preferred embodiment, the user device 10 can be adapted to stream (in real time or not) a filtered version of the medium with the embedded information to the remote server 30.

The user device 10 is also adapted to compute a perceptual hash H' of the medium with the encrypted embedded information M + E_{KRCA}[ID_{SP},H]. It is noted that, as the embedded information is imperceptible to human senses, the perceptual hash H' is insensitive to the presence of the embedded information into the medium so that the perceptual hash of the medium M with or without encrypted embedded information is the same.

At the receipt of the medium, the user device 10 can also be adapted to play the medium on the user device 10 itself.

The remote server 30 is adapted to receive the medium M comprising the encrypted embedded information E_{KRCA}[ID_{SP},H] (or a filtered version thereof), to extract the encrypted embedded information E_{KRCA}[ID_{SP},H] from it and to send the extracted encrypted embedded information E_{KRCA}[ID_{SP},H] to the user device 10.

The remote server 30 is advantageously adapted to extract the encrypted embedded information E_{KRCA}[TD_{SP},H] according to techniques known in the art, depending on the technique (e.g., steganography, watermarking or other data hiding techniques used) used to embed the encrypted information into the medium.

At the receipt of the extracted encrypted embedded information E_{KRCA}[ID_{SP},H] from the remote server 30, the user device 10 is adapted to decrypt the encrypted embedded information in order to obtain the at least one identifier ID_{SP} and the perceptual hash H of the medium. The decrypting operation is represented in figure 2 with the symbol D_{KUCA}[ID_{SP},H]_{.}

In the preferred embodiment, wherein encryption is performed by using the private key KR_{CA} of the certification authority 50, the user device 10 is adapted to decrypt the encrypted embedded information by using the public key KU_{CA} of said at least one certification authority 50.

After decrypting, the user device 10 is adapted to compare the perceptual hash H' computed on the received medium M with the perceptual hash H embedded into the medium M, as obtained from the encrypted embedded information.

If the match is negative, an error is generated in the system.

On the other hand, if the computed perceptual hash H' matches with the perceptual hash H as obtained from the encrypted embedded information, the user device 10 uses the at least one identifier ID_{SP} to connect to the service provider 20 and to supply the predetermined service S to the user.

For example, the at least one identifier ID_{SP} can be either an address enabling the user device 10 to connect to the service provider 20, as for example a URL of an Internet web page of the service provider 20, or an identifier associated with said address. This latter solution may be advantageous because the identifier may be a shorter piece of information to be embedded into the medium, for example 24 or 16 bits long, compared to the address (e.g. 32 bits long).

When the at least one identifier ID_{SP} is the address of the service provider 20, the user device 10 can directly use it to connect to the service provider 20.

On the other hand, when the at least one identifier ID_{SP} is an identifier associated with the address of the service provider 20, the user provider 10 will be adapted to retrieve the address associated with the identifier, for example from a suitable database. The database can be either a local database hosted into the user device 10 and/or a remote database hosted into the remote server 30 and/or another remote server.

In case of remote database, the remote server 30 and/or the other remote server can be adapted to decrypt the encrypted embedded information in order to obtain the at least one identifier ID_{SP} or can be adapted to receive the at least one identifier ID_{SP} directly from the user device 10.

When the remote server 30 (or the other remote server) decrypts the encrypted embedded information, the user device 10 and the remote server 30 (or the other remote server) are advantageously adapted to communicate by means of asymmetric key cryptography and, preferably, also by means of digital signature.

Once obtained the address of the service provider 20, the user device 10 is adapted to connect to it in order to supply the predetermined service S to the user.

According to an embodiment, the embedded information can comprise more than one identifier. For example, the embedded information can comprise the identifier ID_{SP} and a further identifier ID_{MEDIUM}. For example, the identifier ID_{SP} can be the address or identifier of a home page of the service provider 20 while the further identifier ID_{MEDIUM} can be the address or identifier of a specific web page of the service provider 20, related to a specific service associated with the specific medium.

It is noted, that in the embodiments shown in the figures the operation of extracting the encrypted embedded information E_{KRCA}[ID_{SP},H] from the medium M is performed by the remote server 30. Considering that user devices are often more limited in terms of resources compared to a server, this advantageously enables to limit the employment of resources (e.g. memory usage, processing power, power consumption) at the user device 10. However, the invention contemplates also the case wherein the extracting operation is performed at the user device 10 itself.

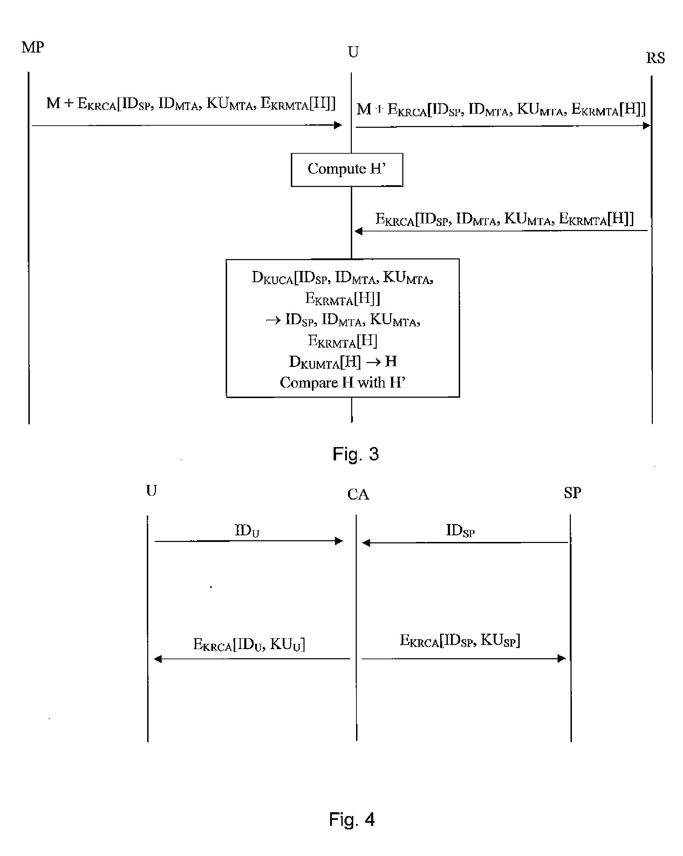

Figure 3 shows another embodiment of the invention which is similar to that of figures 1 and 2 apart from the fact that perceptual hash H embedded into the medium M is further encrypted by a medium trusted authority MTA (not shown), by using a private key KR_{MTA} of the medium trusted authority MTA itself. The perceptual hash H encrypted with the private key KR_{MTA} is represented in figure 2 with the symbol E_{KRMTA}[H] .

In order to enable the user device 10 to decrypt the encrypted perceptual hash E_{KRMTA}[H], the encrypted embedded information further comprises a digital certificate E_{KRCA}[ID_{MTA}, KU_{MTA}] of the medium trusted authority MTA, as released from the certificate authority 50, containing an identifier ID_{MTA} of the medium trusted authority MTA and a public key KU_{MTA} of the medium trusted authority MTA. Even if not shown, it is noted that the digital certificate can also comprise a time stamp adapted to indicate an expiry date of the digital certificate itself.

In this embodiment, the user device 10 will be also adapted to decrypt the digital certificate E_{KRCA}[ID_{MTA}, KU_{MTA}] of the medium trusted authority MTA by using the public key KU_{CA} of the certificate authority 50, to retrieve from said digital certificate the public key KU_{MTA} of the medium trusted authority MTA and to use it for decrypting the encrypted perceptual hash E_{KRMTA}[H]. The decrypting operations are represented in figure 2 with the symbols D_{KUCA}[ID_{SP}, ID_{MTA}, KU_{MTA}, E_{KRMTA}[H]] and D_{KUMTA}[H].

The embodiment of figure 3 may be useful when there is an entity (e.g. the medium trusted authority MTA) which supplies the medium M with the associated perceptual hash H, which is different from the entity (e.g. the certification authority 50) that handles the process of associating the at lest one identifier ID_{SP} with a specific service S and embedding the encrypted embedded information into the medium M. For example, the MTA may be a recording industry or music producer while the certification authority 50 may be a service supply company providing services to the users according to the method of the invention.

It is noted that even if in the figures the information is shown as globally encrypted with the private key KR_{CA} (see, for example, the symbols E_{KRCA}[ID_{SP}, H] and E_{KRCA}[ID_{SP}, E_{KRMTA}[H], ID_{MTA}, KU_{MTA}]), the information can also be encrypted individually or in groups of information.

Furthermore, even if in only two cases have been described, wherein there is a single certification authority 50 or two certification authorities (certification authority 50 and medium trusted authority MTA), the invention applies also to cases wherein a hierarchical tree infrastructure of certificate authorities is used.

As explained above, it is also observed that encryption of the information embedded into the medium M advantageously enables to guarantee that the encrypted embedded information comes from a trusted authority (the certification authority 50), without any tampering.

In addition, the insertion of the perceptual hash H of the medium into the embedded information and the check about the match between the computed perceptual hash H' and said perceptual hash H advantageously enables to guarantee that the encrypted embedded information is properly associated with the intended medium M.

The service supply method of the invention is thus secure in terms of authenticity of the embedded information source, integrity of the embedded information and authenticity of the medium.

In order to further improve security in the service supply method of the invention, according to a preferred embodiment of the invention data communications between the user device 10 and the service provider 20 are performed by means of cryptography.

Figure 4 shows an example wherein asymmetric key cryptography is used and wherein the user device 10 (U) and the service provider 20 (SP) obtain digital certificates from the certification authority 50 (CA).

In figure 4, the user device 20 and the service provider 20 send their identifiers ID_{U} and ID_{SP}, respectively, to the certification authority 50 and the certification authority 50 sends back the digital certificates E_{KRCA}[ID_{U}, KU_{U}] and E_{KRCA}[ID_{SP}, KU_{SP}] to the user device 10 and, respectively, the service provider 20. The digital certificates are encrypted with the private key KR_{CA} of the certification authority 50 and contain the identifiers ID_{U} and ID_{SP} and public keys KU_{U} and KU_{SP} of the user device 10 and the service provider 20, respectively. The fact that the digital certificates are encrypted with the private key of the certification authority 50 guarantees authenticity of the digital certificates.

Even if not shown, it is noted that the digital certificates can also comprise a time stamp adapted to indicate an expiry date thereof.

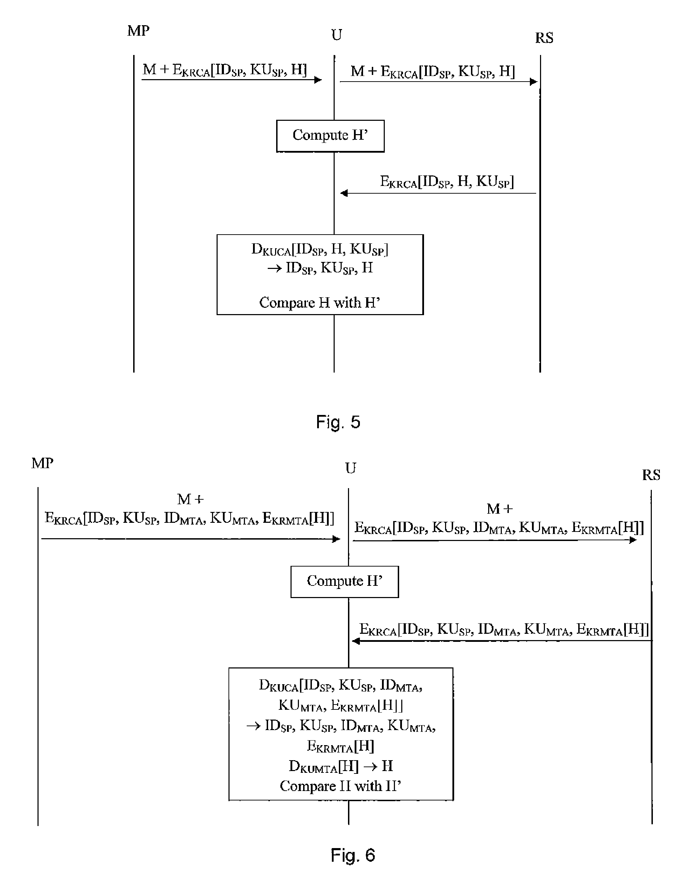

In the embodiment wherein data communications between the user device 10 and the service provider 20 are performed by means of asymmetric key cryptography, the encrypted embedded information embedded into the medium M advantageously further comprises the public key KU_{SP} of the service provider 20. This is schematically shown in the figures 5 and 6 for the embodiments of figures 2 and 3, respectively.

It is noted that even if in figures 5 and 6 the information is shown as globally encrypted it can also be encrypted individually or in groups of information.

In the embodiments of figures 5 and 6, once the user device 10 decrypts the embedded information and obtains the identifier ID_{SP} and public key KU_{SP} of the service provider 20, it is enabled to communicate with the service provider 20 by using the private/public keys of user device 10 and service provider 20, according to asymmetric key cryptography technology.

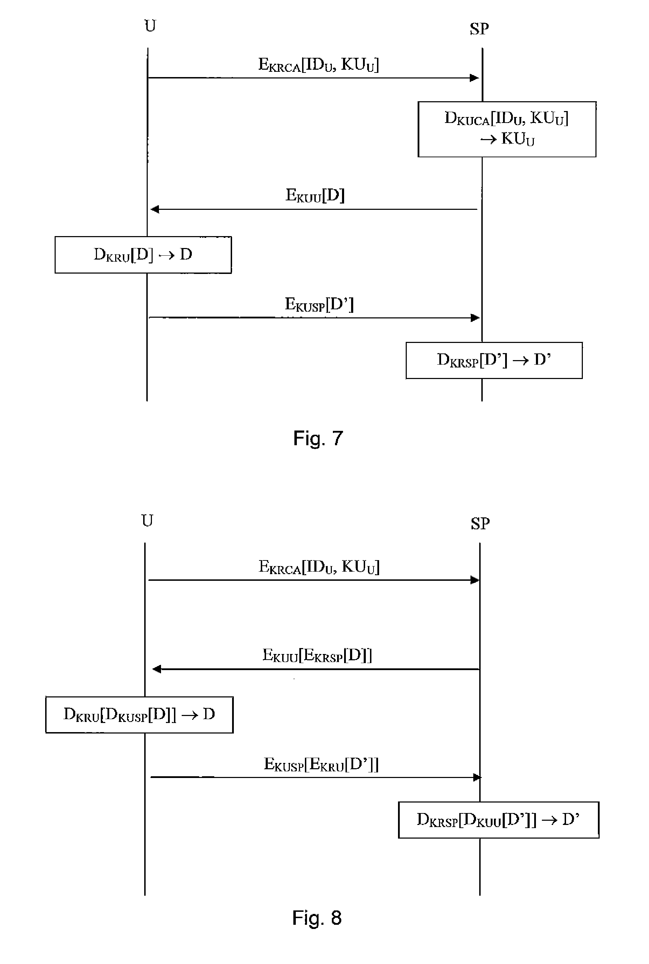

In particular, as schematically and exemplarily shown in Figure 7, the user device 10 sends its digital certificate E_{KRCA}[TD_{U}, KU_{U}] to the service provider 20. The service provider 20 decrypts the digital certificate by using the public key KU_{CA} of the certification authority 50 (D_{KRCA}[ID_{U}, KU_{U}]) in order to obtain the public key KU_{U} of the user device 10.

It is noted that the service provider 20 will be advantageously adapted to obtain via a secure channel, according to techniques known in the art, the public key KU_{CA} of the certification authority 50.

Once obtained the public key KU_{U} of the user device 10, the service provider 20 can use it to encrypt data D, related to the service S, and send the encrypted data (E_{KUU}[D]) to the user device 10.

The user device 10 will be adapted to decrypt the encrypted data (D_{KRU}[D]) by using its private key KR_{U} in order to obtain the data D, useful for supplying the service S to the user.

In case of need, the user device 10 can send encrypted data D', encrypted with the public key of the service provider 20 (E_{KUSP}[D']), to the service provider 20.

The service provider 20 will decrypt the encrypted data (D_{KRSP}[D']) by using its private key KR_{SP} in order to obtain the data D', useful for supplying the service S to the user. Any further data communication between the user device 10 and the service provider 20, useful for supplying the service S to the user, can be performed in a similar way.

The use of cryptography for data communication between the user device 10 and the service provider 20 advantageously enables to further improve the security of the service supply method of the invention.

In fact, the use of digital certificates (E_{KRCA}[ID_{U}, KU_{U}] and E_{KRCA}[ID_{SP}, KU_{SP}]) guarantees the authenticity of the user device 10 and the service provider 20.

In addition, the use of the public/private keys for encrypting/decrypting as shown in figure 7 guarantees the secrecy and confidentiality of the data exchanged between the user device 10 and the service provider 20. For example, it guarantees that a data D (e.g. a gift token or an only-adult service) sent by the service provider 20 is detected only by the intended user device 10, in possession of the right secret key KR_{U}. At the same time, it guarantees that a data D' (e.g. a credit card number or a quiz answer) sent by the user device 10 is detected only by the intended service provider 20, in possession of the right secret key KR_{SP}.

Security of the service supply method of the invention can be further improved by further encrypting, within the encrypted imbedded information, the identifier ID_{SP} of the service provider 20 with the public key KU_{U} of the user device. For example, in this case, the encrypted imbedded information of figure 2 would change into E_{KRCA}[E_{KUU}[TD_{SP}],H], while the encrypted imbedded information of figure 3 would change into E_{KRCA}[E_{KUU}[ID_{SP}], TD_{MTA}, KU_{MTA}, E_{KRMTA}[H]].

This further encryption contributes to the improvement of security in that it enables to supply a specific service S only to a specific user device, equipped with the proper private key KR_{U}, preventing any other unauthorized user device from obtaining the identifier ID_{SP}.

This further encryption is advantageous also because it may enable to supply different services S_{A}, S_{B}, S_{C}, S_{D} to different users in association with a same medium M. For example, this could be achieved by inserting into the encrypted imbedded information, embedded in a same medium M, different identifiers (e.g. ID_{SPA}, TD_{SPB}, ID_{SPC}, ID_{SPD}) encrypted with the public keys (e.g. KU_{UA}, KU_{UB}, KU_{UC}, KU_{UD}) of different user devices (e.g. A, B, C, D). A further non-encrypted generic identifier ID_{SP} may also be used, to be detected by any user.

It is noted that when this further encryption is used in the embodiment of figures 5 and 6, the encrypted embedded information might also comprise the public key(s) (KU_{SPA}, KU_{SPB}, KU_{SPC}, KU_{SPD} and, optionally, KU_{SP}) of the service providers identified by ID_{SPA}, ID_{SPB}, ID_{SPC}, ID_{SPD} and, optionally, ID_{SP}. In alternative, a single public key can be used when the service provider 20 providing the services S_{A}, S_{B}, S_{C}, S_{D} is the same.

Security of the service supply method of the invention can be further improved by using, in data communication between the user device 10 and the service provider 20, a digital signature technique besides asymmetric key cryptography. This would advantageously avoid any repudiation issue between the user device 10 and the service provider 20, for example, in purchasing-selling transactions.

Digital signature can be performed according to any technique known in the art. For example, as schematically shown in figure 8, the service provider 20 can encrypt the data D first by using its private key KR_{SP} and then by using the public key KU_{U} of the user device 10 (E_{KUU}[E_{KRSP}[D]]). In a similar way, the user device 10 can encrypt the data D' first by using its private key KR_{U} and then by using the public key KU_{SP} of the service provider 20 (E_{KUSP}[E_{KRU}[D']]).

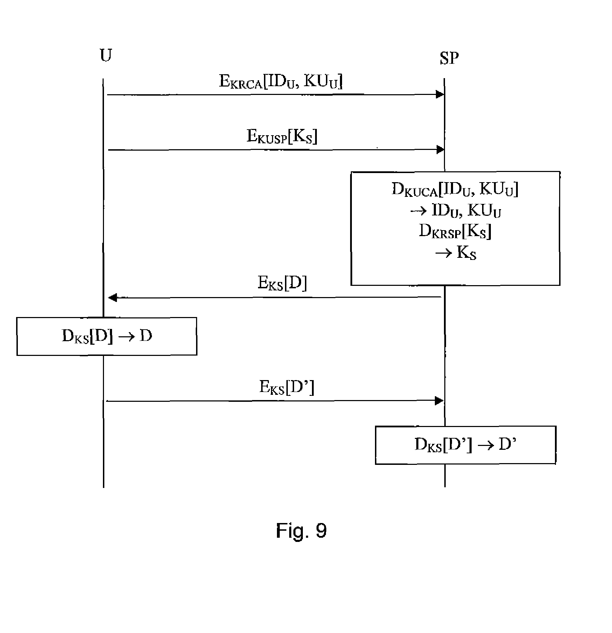

Figure 9 shows another embodiment wherein the user device 10 and the service provider 20 use asymmetric key cryptography in order to exchange a shared secret key K_{S} to be used for subsequent data communication via symmetric key cryptography. Thu use of symmetric key cryptography advantageously enables to increase the speed of encrypted data communications and to simplify them.

The secret key can be exchanged according to any technique known in the art.

In the example of figure 9, the user device sends its digital certificate E_{KRCA}[ID_{U}, KU_{U}] to the service provider 20 together with a secret key K_{S} encrypted with the public key KU_{SP} of the service provider 20 (E_{KUSP}[K_{S}]) and, preferably, time stamps (not shown) indicating expiry dates for the digital certificate and the secret key. The service provider 20 decrypts the digital certificate by using the public key KU_{CA} of the certification authority 50 (D_{KUCA}[ID_{U}, KU_{U}]). If the decryption operation is successful, the user device 10 is authenticated and the service provider 20 decrypts the secret key K_{S} by using its private key KR_{SP} (D_{KRSP}[K_{S}]).

Once obtained the secret key K_{S}, the service provider 20 can use it to encrypt data D, related to the service S, and send the encrypted data (E_{KS}[D]) to the user device 10.

According to other embodiments (not shown), additional data (as nonce numbers) may be exchanged between the user device 10 and the service provider 20 in order to univocally identify data communications while exchanging the shared secret key. In alternative, other techniques known in the art (as for example Diffie-Hellman key exchange method) can be used for enabling the user device 10 and the service provider 20 to create a same shared secret key, without exchanging it.

The user device 10 will decrypt the encrypted data (D_{KS}[D]) by using the secret key K_{S} in order to obtain the data D, useful for supplying the service S to the user.

In case of need, the user device 10 can send encrypted data D', encrypted with the secret key K_{S} (E_{KS}[D']), to the service provider 20.

The service provider 20 will decrypt the encrypted data (D_{KS}[D']) by using the secret key K_{S} in order to obtain the data D' , useful for supplying the service S to the user. Any further data communication between the user device 10 and the service provider 20, useful for supplying the service S to the user, can be performed in a similar way.

As it will be clear from the above description, according to the invention media are transmitted to user devices with encrypted embedded information that enables the user devices to connect to service providers for supplying predetermined services to the users.

As an example, the media with the encrypted embedded information can be audio signals of a TV talk show or movie (or similar) and the services can involve the provision of information to the users about TV images the users are watching into the TV (e.g. information about the actors, about items of clothing and/or furnishing, about the movies or talk shows, about the set and similar). User devices (e.g. a tablet or smart phone) provided with a software application adapted to carry out the method of the invention will be adapted to detect such media with the encrypted embedded information and to supply the relevant services to the users.

Thanks to the invention, services are provided to the users in a secure context wherein integrity of the embedded information and authenticity of the media are guaranteed.

In addition, in preferred embodiments of the invention, user device/service provider authentication, confidentiality in data communication between user device and service provider, non-repudiation between user device and service provider are also guaranteed.

Furthermore, in a preferred embodiment of the invention, multi users differentiated secure service provision is enabled.

## Claims

1. Method of service supply comprising the steps of:
- supplying a medium M to a user device (10), the medium M comprising embedded information that, in turn, comprises at least one identifier ID_{SP} associated with a predetermined service,
- extracting the embedded information from the medium M supplied to the user device (10) in order to obtain said at least one identifier ID_{SP},
- using said at least one identifier ID_{SP} to connect the user device (10) to a service provider (20) for supplying said predetermined service to a user of the user device (10),
**characterized in that**:
- the embedded information is encrypted and further comprises a perceptual hash H of the medium M, the step of extracting being performed on the encrypted embedded information, and **in that**
- the method further comprises the steps of:
* decrypting the encrypted embedded information, as extracted from the medium M, in order to obtain said at least one identifier ID_{SP} and said perceptual hash H,
* computing a perceptual hash H' of the medium M and comparing the computed perceptual hash H' with the perceptual hash H as obtained from the encrypted embedded information, the step of using said at least one identifier ID_{SP} being performed if the computed perceptual hash H' matches with the perceptual hash H obtained from the encrypted embedded information.

2. Method of service supply according to claim 1, wherein the medium M is an audio signal.

3. Method of service supply according to claim 1, wherein the embedded information is encrypted by using a private key KR_{CA} of at least one certification authority (50).

4. Method of service supply according to claim 3, wherein, decrypting the encrypted embedded information is performed by using a public key KU_{CA} of said at least one certification authority (50).

5. Method of service supply according to claim 1, wherein the user device (10) is connected to the service provider (20) by means of encrypted data communication.

6. Method of service supply according to claim 5, wherein said encrypted data communication between the user device (10) and the service provider (20) is performed by means of asymmetric key cryptography.

7. Method of service supply according to claim 5 or 6, wherein said encrypted data communication between the user device and the service provider is performed by means of digital signature.

8. Method of service supply according to claim 6, wherein the encrypted embedded information further comprises a public key KU_{SP} of the service provider (20).

9. Method of service supply according to claim 6, wherein the user device (10) sends to the service provider (20) a digital certificate of the user device (10) encrypted by using a private key KR_{CA} of a certification authority (50), said digital certificate comprising a public key KU_{U} of the user device (10).

10. Method of service supply according to claim 1, wherein the step of extracting the encrypted embedded information from the medium M is executed by a remote server (30).

11. Method of service supply according to claim 1, wherein the embedded information is embedded into the medium M by means of watermarking or steganography.

12. System (1) of service supply comprising a user device (10) which is adapted to:
- receive a medium M, the medium M comprising embedded information that, in turn, comprises at least one identifier ID_{SP} associated with a predetermined service, and
- use said at least one identifier ID_{SP} to connect to a service provider (20) for supplying said predetermined service to a user of the user device (10),
**characterized in that**:
- the embedded information is encrypted and further comprises a perceptual hash H of the medium M, and **in that**
- the user device (10) is adapted to obtain decryption of the encrypted embedded information and to use said at least one identifier ID_{SP} to connect to the service provider (20) if a perceptual hash H' computed for the medium M matches with the perceptual hash H as obtained from said decryption of the encrypted embedded information.

13. System according to claim 12, further comprising a remote server (30) adapted to receive from the user device (10) said medium M with the encrypted embedded information, to extract said encrypted embedded information from the medium M and to transmit the extracted encrypted embedded information to the user device (10), wherein the user device (10) is adapted to decrypt the extracted encrypted embedded information in order to obtain said at least one identifier TD_{SP} and said perceptual hash H.

14. System according to claim 12, further comprising a remote server (30) adapted to receive from the user device (10) said medium M with the encrypted embedded information, to extract said encrypted embedded information from the medium M and to decrypt the extracted encrypted embedded information in order to obtain said at least one identifier ID_{SP} and said perceptual hash H.

15. System according to claim 12, wherein the user device (10) is adapted to compute the perceptual hash H' of the medium M and to compare the computed perceptual hash H' with the perceptual hash H as obtained from said decryption of the encrypted embedded information.
